# EUROPEAN PATENT SPECIFICATION

(11) **EP 0 978 810 B1**
(45) Date of publication and mention of the grant of the patent: **13.10.2004**
(21) Application number: 99305917.9
(22) Date of filing: 26.07.1999
(51) Int. Cl.: G08B 25/10

(54) **Intermittent low bandwidth, wireless data network and method of operation thereof**
Drahtloses Datennetz und Verfahren zu seinem Betrieb
Réseau numérique sans fil et sa méthode d'opération

(30) Priority: 07.08.1998 US 130913
(43) Date of publication of application: 09.02.2000
(73) Proprietor: LUCENT TECHNOLOGIES INC., Murray Hill, New Jersey 07974-0636 (US)
(72) Inventor: Rohrbach, William R., Towaco, New Jersey 07082 (US); Shah, Nitin J., Scotch Plains, New Jersey 07076 (US)
(74) Representative: Buckley, Christopher Simon Thirsk

(56) References cited:
- EP-A- 0 417 944
- WO-A-98/16412
- WO-A-98/59523
- US-A- 5 416 725

## Description

### Technical Field Of The Invention

The present invention is directed, in general, to wireless data communications and, more specifically, to a wireless data network that operates intermittently and interstitially and a method of operating the same.

### Background Of The Invention

Security systems are used widely around the world in both commercial and residential settings. Most systems register alarm signals both locally and at central monitoring stations, commonly located within the same city or region. The central monitoring stations may be either local law enforcement or private services, which usually notify the police force. Commonly, an alarm is triggered and the security system activates a local warning and seizes a conventional telephone line to notify the central monitoring station of the situation.

Many of these security systems employ cellular backups in addition to common ground line communications when alarms are triggered. These backup are attractive, since conventional telephone lines are subject to being severed during unauthorized activity (*e*.*g*., burglary). Should no telephone line be available, the system switches to the cellular backup to establish a cellular link with the monitoring station to report the alarm. Alternatively, some systems establish concurrent conventional telephone links and cellular phone links with the central monitoring station. The cellular backups are essentially commercially available cellular telephones that request and receive high quality wireless voice communication channels.

As common as these backups have become, they do possess limitations which restrict their economic viability. One limitation associated with present cellular backup systems is that communications are limited to one-way outgoing messages. Such systems do not posses the ability to contact the backups independently because the backups are not able to receive messages from outside sources. As previously stated, when an event-driven alarm occurs, the system establishes a cellular link with the associated central monitoring station and transmits an alarm signal. If the security system develops a problem that does not trigger an alarm signal (*e.g.*, loss of power, sensor failure or internal circuitry failure), no alarm signal is transmitted and the central monitoring station cannot establish a link to the alarm system to verify system status.

Another limitation commonly encountered when employing present cellular backup systems is the large bandwidth required to transmit a relatively small alarm signal. Conventional cellular backup systems must utilize the same baud rates and bandwidths as commercially available personal cellular communication systems (commonly telephones). Commercial cellular lines are designed for voice and video transmissions (continuous media) and therefore require large bandwidths and baud rates with little or no interruptions to support a desired quality of service. Customers using security systems with cellular backups are required to pay for high quality, continuous media cellular services where systems with smaller bandwidths could suffice.

In an attempt to solve this problem, designers of more recent systems considered using cellular digital packet data (CDPD) technology to overcome the problems with bandwidth usage. CDPD may be broadly described as a new process for cellular use as a means of data transmission. Through CDPD technology, data packets are sent along idle channels of existing cellular voice networks. Further, these packets may be sent at very high speeds during pauses in cellular phone conversations. By adding CDPD to an existing cellular system, cellular operators can transmit data at much high speeds without seeking out separate data transmission lines (for more general information on CDPD technology, see http:\\www.cdpd.org on the Internet).

Unfortunately, CDPD has many drawbacks which make it unattractive as a solution to the problems encountered. Although this technology is able to utilize "spaces" in cellular traffic, even during peak usage times, large bandwidth are still required for the transmissions. Further, where traffic "spaces" are not available, CDPD seizes a full cellular channel, thus subjecting the user to the inefficiencies encountered while employing full bandwidth, commercial cellular lines.

Finally, power supplies and battery backups are another concern encountered while employing conventional cellular backups. Using and maintaining cellular backups require expensive power supplies and battery backups which further economically burden the user. Since commercial cellular systems require continuous transmission with little or no interruptions, maintaining system power is important. Since security systems transmit such small amounts of data, using commercial quality cellular lines amount to significant overkill and the associated power systems contribute to cost inefficiencies.

Accordingly, what is needed in the art is an improved alarm system that overcomes the above-described deficiencies of the prior art.

US-A-5 416 725 discloses a notification system for reporting events occurring within a defined area being monitored thereby. The notification system includes a plurality of sensors installed at selected locations within the defined area and a sensor interface coupled to each of the sensors. The sensor interface periodically polls the sensors and stores status information received therefrom. Coupled to the sensor interface is a computer system for receiving and analyzing the stored status data. Upon determining from the status data that an event requiring issuance of a notification has occurred, the computer system issues a series of notifications for which each recipient of a notification receives a selected message regarding the event.

### Summary of the Invention

An alarm system, a method and a voice network according to the invention are as set out in the independent claims. Preferred forms are set out in the dependent claims.

To address the above-discussed deficiencies of the prior art, the present invention provides, for use in a wireless network, an alarm system and method of operation thereof. In one embodiment, the alarm system includes: (1) a local transceiver that, in response to a received stimulus, establishes a wireless link of diminished bandwidth to a wireless central monitoring station in the wireless network and (2) a local controller, coupled to the transceiver for bidirectional communication therewith, that receives commands from the wireless central monitoring station via the wireless link.

The present invention therefore introduces the broad concept of employing diminished-bandwidth transceivers in a wireless alarm network capable of bidirectional communication. For purposes of the present invention, a "wireless link of diminished bandwidth" is defined as a wireless link having a bandwidth insufficient to provide commercially-acceptable quality of service standards for voice communication. Conventional cellular telephones are not capable of establishing a wireless link of diminished bandwidth.

In one embodiment of the present invention, the local transceiver and the wireless central monitoring station exchange data in bursts. "Bursts," for purposes of the present invention, are discontinuous portions of an overall transmission. Bursts are not suitable for communicating continuous (streaming) media, such as real-time voice. Of course the local transceiver and the wireless central monitoring station may be capable of engaging in an entire communications session in one burst.

In one embodiment of the present invention, the stimulus is an alarm event communicated from the local controller to the local transceiver. In a more specific embodiment of the present invention, the local event is selected from the group consisting of: (1) a user-triggered alarm event and (2) an intruder-triggered alarm event. Alternatively, the local event may be a given time (of day, perhaps) or may be an informational event not meant to generate an alarm, such as may occur if the (authorized) user opens a door or activates an oven.

In one embodiment of the present invention, the stimulus is a command communicated from the wireless central monitoring station to the local transceiver. In a more specific embodiment of the present invention, the wireless central monitoring station establishes the wireless link exclusively with the local transceiver. In a more specific embodiment of the present invention, the wireless central monitoring station broadcasts the command to a plurality of transceivers including the local transceiver. Broadcasts, such as may be employed to synchronize local alarm system clocks, greatly conserve wireless network bandwidth.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### Brief Description Of The Drawings

For a more complete understanding of the present invention, reference is now made to the following descriptions taken in conjunction with the accompanying drawings, in which:
FIGURE 1 illustrates a wireless network employing embodiments of an alarm system constructed according to the principles of the present invention;
FIGURE 2 illustrates an alarm system constructed according to the principles of the present invention; and
FIGURE 3 illustrates a flow diagram of a method of operating an alarm system constructed according to principle of the present invention.

### Detailed Description

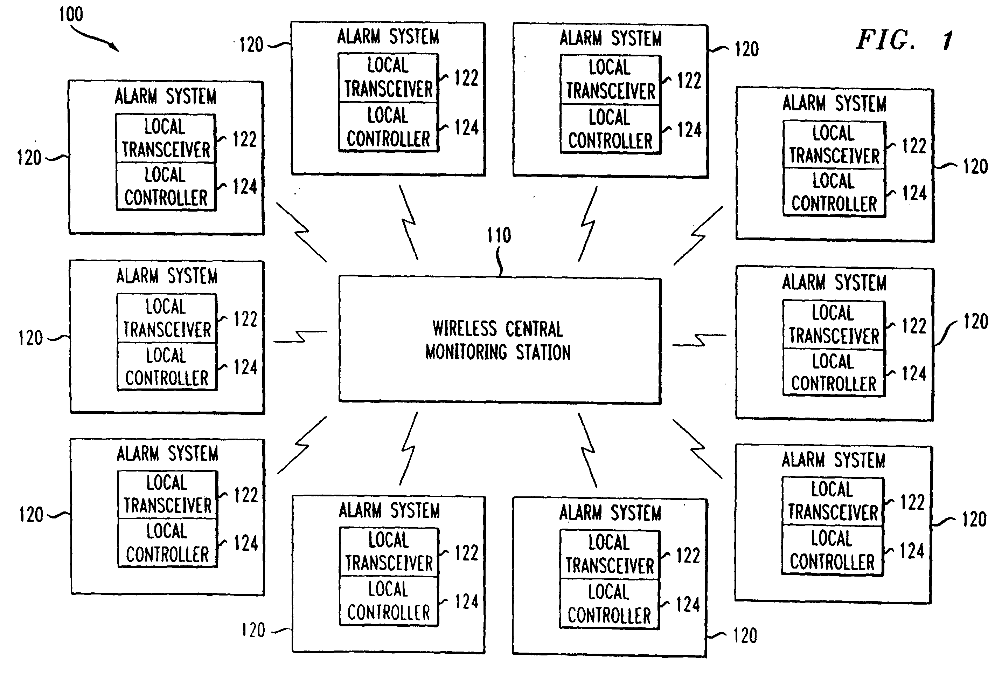

Referring initially to FIGURE 1, illustrated is a wireless network employing embodiments of an alarm system constructed according to the principles of the present invention. The network-100 consists of a wireless central monitoring station (WCMS) 110 that is wirelessly coupled to a plurality of alarm systems (one of which designated 120) for communication therewith. Each alarm system 120 contains a local transceiver 122 coupled to a local controller 124 for bidirectional communication. The transceiver 122 is capable of establishing a wireless link of diminished bandwidth with the WCMS 110 and the controller 124 can send and receive commands and data to and from the WCMS 110 via the established wireless link. The transceiver 122 and the WCMS 110 exchange data in bursts that consist of discontinuous portions of an overall transmission. Within the wireless link, such burst transmissions allow for diminished bandwidth in the wireless link since the bursts do not require real-time voice-quality lines of communication.

The WCMS 110 can contact each individual alarm system 120 to "poll" the individual system 120. During polling, the WCMS 110 establishes a wireless link with the transceiver 122 to relay commands to the controller 124 which may include downloading non-alarm related data (*e.g.*, door openings) to routine maintenance and diagnostics (*e.g.*, setting system clocks). By allowing bidirectional communication with the various alarm systems 120, the WCMS 110 can remotely monitor the operational status of the systems 120. In some cases, where larger bandwidths are necessary, required maintenance and diagnostics would be performed only during non-peak operating hours (e.g., late night/early morning hours).

Additionally, bidirectional communications allow the WCMS 110 to remotely upgrade the system software in the alarm systems 120. In order to distribute the upgrade in the network 100, the WCMS 110 transmits the software either to alarm systems 120 in a small geographic region, to a certain class of customers dispersed throughout a major geographic region who subscribe to extra features/services or to a single user who subscribes to a specific or customized service. Utilizing the wireless link for upgrading the system eliminates the need to dispatch staff for on-site system upgrades and consolidates all software administration, monitoring and security responsibilities into a single central location under the control of the system administrator. Consequently, such a system would have dramatic impact on cost, security and integrity of the wireless network 100 and the industry as a whole.

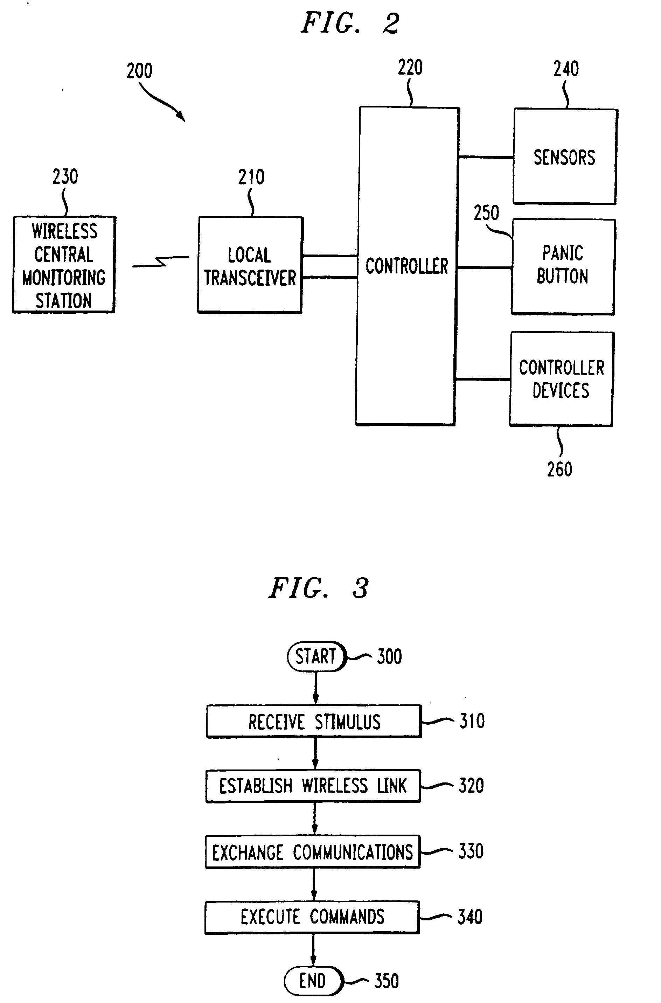

Turning now to FIGURE 2, illustrated is an alarm system constructed according to the principles of the present invention. The alarm system 200 is comprised of a local transceiver 210 coupled to a local controller 220, allowing bidirectional communication therewith. The transceiver is also wirelessly coupled to a wireless central monitoring station (WCMS) 230 as part of a wireless network. Further, the controller 220 is coupled to various sensors 240, a user-triggered panic button" 250 and various controlled devices 260.

The sensors 240 supply information typically monitored by alarm systems (*e.g.*, unauthorized entries or broken windows). Those skilled in the art will understand that the conditions monitored by he sensors can be almost any monitorable condition and is not limited to those typically observed by alarm systems. The panic button 250 is a user-activated device that activates the alarm system, causing the system to alarm signal the WCMS 230. The controlled device is a apparatus whose function is affected by a signal from the controller 220 when an alarm is triggered, either by a user or a predetermined alarm condition.

This system may be employed in all types of environments, including residential locations, commercial sites and automobiles. In residential locations and commercial sites, the sensors 240 could take the form of motion sensors, pressure plates and window or door monitoring devices. The sensors can monitor movement within the residence or commercial site, opening of doors and windows, removal of objects (*e.g.*, pieces of art), temperature, air quality or any other detectable condition.

In an automobile, the sensors 240 can monitor doors, windows, the trunk and the hood. Also, the sensors 240 could monitor the engine, tires, gas cap or even the alarm system itself. Presently, auto thieves are able to counter many auto alarm systems by severing power to the system. Sensors within the system could monitor internal power and register a loss of power.

The panic button 250 is employed when a user remotely activates the alarm system. In a residential setting, a user could activate the panic button 250 when the user believes an intruder has entered the residence, when a fire endangers the user or the residence or when the user has "fallen and can't get up."

The controlled device 260 is activated/deactivated by the controller 220 when an alarm has occurred. In a residential setting, when the controller 220 determines, via the sensor 240, that the oven has been left on, an alarm can be transmitted through the transceiver 210 and the controlled device 260, the oven, can be deactivated, possibly avoiding a fire. The controlled device 260 could be a switch in residence that turns on all of the lights when the user activates the panic button, fearing the presence of an intruder.

In a commercial setting which could also apply to residential applications, the sensors 240 could be smoke detectors, the panic button 250 could be a hand-activated fire alarm and the controlled device 260 could be water sprinkler system. Upon signals from either the sensors 240 or the panic button 250, the controller 220 activates the sprinklers, the controlled device 260, and would direct the transceiver 210 to transmit an alarm signal the WCMS 230, which could be a local fire department dispatcher.

In an automobile, the controlled device 260 may be the ignition which is disabled or may be the horn and headlights which are turned on when a would be thief breaks a window or picks a door lock monitored by the sensors 240. Additionally, in a situation where the user fears an attack by an aggressor, the activated panic button 250 could activate the controlled device 260, again the horn and headlights, to frighten off the would be attacker. Once the system 200 initiated a local alarm, the controller 220 would command the transceiver 210 to establish a wireless link to the WCMS 230 to transmit alarm signal data.

In another embodiment of the present invention, the alarm system 200 includes a video camera that sends image data to the WCMS 230. Like the sensors 240 or the controlled device 260, the video camera is coupled to the local controller 220, enabling data to be sent through the local transceiver 210 to the WCMS 230. By way of the Internet or other communications mediums with appropriate security protocols, a traveler or remote user can connect to the WCMS 230 and examine the status of a residential or commercial alarm system 200. Further, the user may even access image data from the camera to actually view a room in the home or business from a remote location. The bandwidth required by the wireless link remains minimal as the video data or system status data would be transmitted over the diminished bandwidth wireless link to the WCMS 230 and then by conventional data transfer means to the user.

In an alternate embodiment of the present invention, the alarm system 200 includes a message system which can be accessed through the WCMS 230 utilizing the diminished bandwidth wireless link. Similar to the previous embodiment, the user is able to access messages in either voice or data format that originate from a residential or commercial site. In such an embodiment, phone lines at the residential or commercial site are monitored and answered by an automated system (i.e., an answering machine). These recorded message are uploaded and stored in the controller 220 and retrieved by the remote user in a manner similar to the retrieval of video images in the previous embodiment.

Finally, in another embodiment of the present invention, the alarm system 200 is configured to allow multiple users to access or receive system status data from a single central site. Rather than allowing multiple users to access data at a remote residential/commercial site or requiring the site to transmit data to multiple recipients, the site communicates the data to the WCMS 230 which, in turn, grants access to selected users. Once the data from the site in question is received, the WCMS 230 transmits the data to the users or allows access to those authorized via the Internet or other communications mediums.

Turning now to FIGURE 3, illustrated is a flow diagram of a method of operating an alarm system constructed according to principle of the present invention. With continued reference to FIGURE 2, the alarm system 200 operates as follows. The method begins at a start step 300. At a receive stimulus step 310, the transceiver 210 senses a stimulus from either the controller 220 or from the WCMS 230. Should there be a local alarm, the controller signals the transceiver 210 to contact the WCMS 230 to relay the alarm signal, including whether the alarm is user-triggered (via a panic button) or intruder-triggered. Conversely, if the WCMS 230 seeks to check the status the alarm system 200, the WCMS 230 contacts the transceiver 210 to establish a link to receive data from the controller 220.

Once the transceiver 210 senses the stimulus, a wireless link of diminished capacity is established between the transceiver 210 and the WCMS 230 during an establish wireless link step 320 for the bidirectional exchange of information and relevant commands. At an exchange communications step 330, the controller 220 sends data to the transceiver 210 which are then relayed to the WCMS 230, usually in data bursts. Once the WCMS 230 receives the data, the WCMS 230 issues commands to the transceiver 210 that are relayed to the controller 220. Further, in situations where the WCMS 230 initiates a wireless link, the WCMS 230 may direct the controller 220, via the transceiver 210, to download any requested information or execute any commands, even though an alarm state may not exist. The WCMS 230 can either communicate with the alarm system 200 singularly or it may broadcast commands to a plurality of alarm systems as referenced in FIGURE 1.

The controller 220 executes the received commands during an execute commands step 340. Such commands range from downloading data collected by the controller 210 (*e.g.*, number and times of door openings) to synchronizing an internal clock to issuing control commands to a controlled device 260. For example, should an alarm exist, such as a fire alarm, the WCMS 230 could issue commands to the controller 220 to activate a water sprinkler system if the internal program within the controller 220 has not done so. Alternatively, when no alarm state exists and through a predetermined time schedule, the WCMS 230 could issue commands to the controller 220 to turn on and off lights within a home to deter possible trespassers when the residents are absent. Once the received commands are executed, the method of operation concludes at an end step 350.

From the above, it is apparent that the present invention provides, for use in a wireless network, an alarm system and method of operation thereof. In one embodiment, the alarm system includes: (1) a local transceiver that, in response to a received stimulus, establishes a wireless link of diminished bandwidth to a wireless central monitoring station in the wireless network and (2) a local controller, coupled to the transceiver for bidirectional communication therewith, that receives commands from the wireless central monitoring station via the wireless link.

Although the present invention has been described in detail, those skilled in the art should understand that they can make various changes, substitutions and alterations herein without departing from the scope of the invention as defined by the claims.

## Claims

1. An alarm system (200) for use in a wireless voice network (100), comprising:
a local transceiver (210) that, in response to a received stimulus, establishes a wireless link of diminished bandwidth to a wireless central monitoring station (230) in said wireless voice network (100), wherein "a wireless link of diminished bandwidth" is defined as a wireless link having a bandwidth insufficient to provide acceptable quality of service standards for voice communication; and
a local controller (220), coupled to said transceiver (210) for bidirectional communication therewith, that receives commands from said wireless central monitoring station (230) via said wireless link.

2. A method of operating an alarm system (200) in a wireless voice network (100), comprising the steps of:
establishing a wireless link of diminished bandwidth to a wireless central monitoring station (230) in said wireless voice network (100) with a local transceiver (210) and in response to a received stimulus, wherein "a wireless link of diminished bandwidth" is defined as a wireless link having a bandwidth insufficient to provide acceptable quality of service standards for voice communication; and
receiving commands from said wireless central monitoring station (230) via said wireless link into a local controller (220) coupled to said transceiver (210) for bidirectional communication therewith.

3. A wireless voice network (100), comprising:
a wireless central monitoring station (110);
a plurality of alarm systems (120) wirelessly couplable to said wireless central monitoring station (110) for communication therewith, each of said plurality of alarm systems (120) including:
a local transceiver (122) that, in response to a received stimulus, establishes a wireless link of diminished bandwidth to said wireless central monitoring station (110) in said wireless voice network (100), wherein "a wireless link of diminished bandwidth" is defined as a wireless link having a bandwidth insufficient to provide acceptable quality of service standards for voice communication, and
a local controller (124), coupled to said transceiver (122) for bidirectional communication therewith, that receives commands from said wireless central monitoring station (110) via said wireless link.

4. An alarm system (200) as claimed in claim 1, or a method as claimed in claim 2, or an alarm network (100) as claimed in claim 3, wherein said local.transceiver (122, 210) and said wireless central monitoring station.(1.10, 230) exchange data in bursts.

5. An alarm system (200) as claimed in claim 1, or a method as claimed in claim 2, or an alarm network (100) as claimed in claim 3, wherein said stimulus is an alarm event communicated from said local controller (124, 220) to said local transceiver (122, 210).

6. An alarm system (200) or a method or an alarm network (100) as claimed in claim 5 wherein said local event is selected from the group consisting of:
a user-triggered alarm event, and
an intruder-triggered alarm event.

7. An alarm system (200) as claimed in claim 1, or a method as claimed in claim 2, or an alarm network (100) as claimed in claim 3, wherein said stimulus is a command communicated from said wireless central monitoring station (110, 230) to said local transceiver (122, 210).

8. An alarm system (200) or a method or an alarm network (100) as claimed in claim 7 wherein said wireless central monitoring station (110, 230) establishes said wireless link exclusively with said local transceiver (122, 210).

9. An alarm network (100) as claimed in claim 7 wherein said wireless central monitoring station broadcasts said command to said plurality of alarm systems (120).

10. An alarm system (100) or method as claimed in claim 7 wherein said wireless central monitoring station (110, 230) broadcasts said command to a plurality of transceivers including said local transceiver (122, 210).

## Patentansprüche

1. Alarmsystem (200) zur Verwendung in einem drahtlosen Sprachnetz (100), mit folgendem:
einem örtlichen Sender/Empfänger (210), der als Reaktion auf einen empfangenen Anreiz eine drahtlose Verbindung verringerter Bandbreite mit einer drahtlosen zentralen Überwachungsstation (230) in diesem drahtlosen Sprachnetz (100) herstellt, wobei "eine drahtlose Verbindung verringerter Bandbreite" als eine drahtlose Verbindung mit ungenügender Bandbreite zur Bereitstellung annehmbarer Dienstgütestandards für Sprachkommunikation definiert ist; und
einer örtlichen Steuerung (220), die an diesen Sender/Empfänger (210) zur zweiseitig gerichteten Kommunikation damit angekoppelt ist und die Befehle von der drahtlosen zentralen Überwachungsstation (230) über die drahtlose Verbindung empfängt.

2. Verfahren zum Betreiben eines Alarmsystems (200) in einem drahtlosen Sprachnetz (100) mit folgenden Schritten:
Herstellen einer drahtlosen Verbindung verringerter Bandbreite mit einer drahtlosen zentralen Überwachungsstation (230) in dem drahtlosen Sprachnetz (100) mit einem örtlichen Sender/Empfänger (210) und als Reaktion auf einen empfangenen Anreiz, wobei "eine drahtlose Verbindung verringerter Bandbreite" als eine drahtlose Verbindung mit einer ungenügenden Bandbreite zur Bereitstellung von annehmbaren Dienstgütestandards für Sprachkommunikation definiert ist; und
Empfangen von Befehlen von der drahtlosen zentralen Überwachungsstation (230) über diese drahtlose Verbindung in eine örtliche Steuerung (220), die an den Sender/Empfänger (210) zur zweiseitig gerichteten Kommunikation mit diesem angekoppelt ist.

3. Drahtloses Sprachnetz (100) mit folgendem:
einer drahtlosen zentralen Überwachungsstation (110);
einer Mehrzahl von drahtlos an die drahtlose zentrale Überwachungsstation (110) zur Kommunikation mit dieser angekoppelbaren Alarmsystemen (120), jeweils mit folgendem:
einem örtlichen Sender/Empfänger (122), der als Reaktion einen empfangenen Anreiz eine drahtlose Verbindung verringerter Bandbreite mit der drahtlosen zentralen Überwachungsstation (110) in dem drahtlosen Sprachnetz (100) herstellt, wobei "eine drahtlose Verbindung verringerter Bandbreite" als eine drahtlose Verbindung mit einer ungenügenden Bandbreite zur Bereitstellung von annehmbaren Dienstgütestandards für Sprachkommunikation definiert ist, und
einer örtlichen Steuerung (124), die an den Sender/Empfänger (122) zur zweiseitig gerichteten Kommunikation mit diesem angekoppelt ist und die Befehle von der drahtlosen zentralen Überwachungsstation (110) über die drahtlose Verbindung empfängt.

4. Alarmsystem (200) nach Anspruch 1 oder ein Verfahren nach Anspruch 2 oder ein Alarmnetz (100) nach Anspruch 3, wobei der örtliche Sender/Empfänger (122, 210) und die drahtlose zentrale Überwachungsstation (110, 230) Daten in Bursts austauschen.

5. Alarmsystem (200) nach Anspruch 1 oder ein Verfahren nach Anspruch 2 oder ein Alarmnetz (100) nach Anspruch 3, wobei der Anreiz ein von der örtlichen Steuerung (124, 220) an den örtlichen Sender/Empfänger (122, 210) übermitteltes Alarmereignis ist.

6. Alarmsystem (200) oder ein Verfahren oder ein Alarmnetz (100) nach Anspruch 5, wobei das örtliche Ereignis aus der Gruppe ausgewählt wird, die aus folgendem besteht:
ein von einem Benutzer ausgelöstes Alarmereignis, und
ein von einem Eindringling ausgelöstes Alarmereignis.

7. Alarmsystem (200) nach Anspruch 1 oder ein Verfahren nach Anspruch 2 oder ein Alarmnetz (100) nach Anspruch 3, wobei der Anreiz ein von der drahtlosen zentralen Überwachungsstation (110, 230) an den örtlichen Sender/Empfänger (122, 210) übermittelter Befehl ist.

8. Alarmsystem (200) oder ein Verfahren oder ein Alarmnetz (100) nach Anspruch 7, wobei die drahtlose zentrale Überwachungsstation die drahtlose Verbindung ausschließlich mit dem örtlichen Sender/Empfänger (122, 210) herstellt.

9. Alarmnetz (100) nach Anspruch 7, wobei die drahtlose zentrale Überwachungsstation den Befehl an die Mehrzahl von Alarmsystemen (120) rundsendet.

10. Alarmnetz (100) oder Verfahren nach Anspruch 7, wobei die drahtlose zentrale Überwachungsstation (110, 230) den Befehl an eine Mehrzahl von Sendern/Empfängern einschließlich des örtlichen Senders/Empfängers (122, 210) rundsendet.

## Revendications

1. Système d'alarme (200) destiné à être utilisé dans un réseau vocal sans fil (100), comprenant :
un émetteur-récepteur local (210) qui, en réponse à un stimulus reçu, établit une liaison sans fil de largeur de bande réduite avec une station de surveillance centrale sans fil (230) dans ledit réseau vocal sans fil (100), « une liaison sans fil de largeur de bande réduite » étant définie comme une liaison sans fil ne possédant pas une largeur de bande suffisante pour offrir des niveaux de qualité de service acceptables pour la communication vocale ; et
une unité de commande locale (220), couplée audit émetteur-récepteur (210) pour communiquer de façon bilatérale avec lui, qui reçoit des commandes provenant de ladite station de surveillance centrale sans fil (230) via ladite liaison sans fil.

2. Procédé d'exploitation d'un système d'alarme (200) dans un réseau vocal sans fil (100), comprenant les étapes consistant à :
établir une liaison sans fil de largeur de bande réduite avec une station de surveillance centrale sans fil (230) dans ledit réseau vocal sans fil (100) à l'aide d'un émetteur-récepteur local (210) et en réponse à un stimulus reçu, « une liaison sans fil de largeur de bande réduite » étant définie comme une liaison sans fil ne possédant pas une largeur de bande suffisante pour offrir des niveaux de qualité de service acceptables pour la communication vocale ; et
recevoir des commandes provenant de ladite station de surveillance centrale sans fil (230) via ladite liaison sans fil dans une unité de commande locale (220) couplée audit émetteur-récepteur (210) pour communiquer de façon bilatérale avec lui.

3. Réseau vocal sans fil (100), comprenant :
une station de surveillance centrale sans fil (110) ;
une pluralité de systèmes d'alarme (120) susceptibles d'être couplés sans fil à ladite station de surveillance centrale sans fil (110) pour communiquer avec elle, chacun de ladite pluralité de systèmes d'alarme (120) comportant :
un émetteur-récepteur local (122) qui, en réponse à un stimulus reçu, établit une liaison sans fil de largeur de bande réduite avec ladite station de surveillance centrale sans fil (110) dans ledit réseau vocal sans fil (100), « une liaison sans fil de largeur de bande réduite » étant définie comme une liaison sans fil ne possédant pas une largeur de bande suffisante pour offrir des niveaux de qualité de service acceptables pour la communication vocale ; et
une unité de commande locale (124), couplée audit émetteur-récepteur (122) pour communiquer de façon bilatérale avec lui, qui reçoit des commandes provenant de ladite station de surveillance centrale sans fil (110) via ladite liaison sans fil.

4. Système d'alarme (200) selon la revendication 1, ou procédé selon la revendication 2, ou réseau d'alarme (100) selon la revendication 3, dans lequel ledit émetteur-récepteur local (122, 210) et ladite station de surveillance centrale sans fil (110, 230) échangent des données par rafales.

5. Système d'alarme (200) selon la revendication 1, ou procédé selon la revendication 2, ou réseau d'alarme (100) selon la revendication 3, dans lequel ledit stimulus est un événement d'alarme communiqué de ladite unité de commande locale (124, 220) audit émetteur-récepteur local (122, 210).

6. Système d'alarme (200) ou procédé ou réseau d'alarme (100) selon la revendication 5, dans lequel ledit événement local est choisi parmi le groupe constitué :
d'un événement d'alarme déclenché par l'utilisateur ;
d'un événement d'alarme déclenché par un intrus.

7. Système d'alarme (200) selon la revendication 1, ou procédé selon la revendication 2, ou réseau d'alarme (100) selon la revendication 3, dans lequel ledit stimulus est une commande communiquée de ladite station de surveillance centrale sans fil (110, 230) audit émetteur-récepteur local (122, 210).

8. Système d'alarme (200) ou procédé ou réseau d'alarme (100) selon la revendication 7, dans lequel ladite station de surveillance centrale sans fil (110, 230) établit ladite liaison sans fil exclusivement avec ledit émetteur-récepteur local (122, 210).

9. Réseau d'alarme (100) selon la revendication 7, dans lequel ladite station de surveillance centrale sans fil diffuse ladite commande à ladite pluralité de systèmes d'alarme (120).

10. Système d'alarme (100) ou procédé selon la revendication 7, dans lequel ladite station de surveillance centrale sans fil (110, 230) diffuse ladite commande à une pluralité d'émetteurs-récepteurs comprenant ledit émetteur-récepteur local (122, 210).
